# EUROPEAN PATENT APPLICATION

(11) **EP 4 576 900 A1**
(43) Date of publication of application: **25.06.2025**
(21) Application number: 23885060.6
(22) Date of filing: 02.11.2023
(51) Int. Cl.: H04W 72/04

(54) **RESOURCE CONFIGURATION METHODS, DEVICE, AND STORAGE MEDIUM**

(30) Priority: 03.11.2022 CN 202211369930
(71) Applicant: ZTE Corporation, Shenzhen, Guangdong 518057 (CN)
(72) Inventor: XING, Weimin, Shenzhen, Guangdong 518057 (CN); MIAO, Ting, Shenzhen, Guangdong 518057 (CN); HU, Yuzhou, Shenzhen, Guangdong 518057 (CN); LU, Youxiong, Shenzhen, Guangdong 518057 (CN)
(74) Representative: Aipex B.V.
(86) International application number: PCT/CN2023/129400
(87) International publication number: WO 2024/094135

(57) **Abstract**

Provided are a resource configuration method, a device, and a storage medium. The resource configuration method applied to a first communication node includes receiving (S210) first resource configuration information configured by a second communication node, where the first resource configuration information includes configuration information of a resource block set corresponding to a first-type cell, a first parameter of the resource block set is greater than or equal to a second parameter of a bandwidth part (BWP) selected on a second-type cell, the first-type cell is a cell corresponding to a first network element in the first communication node, and the second-type cell is a first cell group corresponding to a second network element in the first communication node; and configuring (S220) a frequency domain resource of the first-type cell based on the first resource configuration information.

## Description

### TECHNICAL FIELD

This application relates to the field of communication technologies, for example, a resource configuration method, a device, and a storage medium.

### BACKGROUND

An integrated access and backhaul (IAB) node includes two types of logical entities. One type is a mobile terminal (MT). An IAB MT is connected to an upper-level IAB node (the parent node) through one or more radio carriers or serving cells to implement backhaul. The other type is a distributed unit (DU). A DU provides one or more serving cells for a subordinate terminal or a lower-level IAB node by using the identity of a base station. From the perspective of an IAB node, a cell used for communication between an IAB MT and the parent node is referred to as an MT serving cell (MT cell), and a cell used for communication between an IAB DU and a lower-level communication device is referred to as a DU cell. An IAB MT and an IAB DU of an IAB node support a more flexible multiplexing mode, including frequency division multiplexing (FDM). That is, the IAB MT and the IAB DU can work in different frequency ranges on one carrier simultaneously or can work in space division multiplexing (SDM) or even full-duplex. In these new multiplexing modes, it is required to coordinate a resource granularity in an MT serving cell and a resource granularity in a DU cell to achieve more effective resource scheduling.

### SUMMARY

Embodiments of this application provide a resource configuration method, a device, and a storage medium, achieving effective resource scheduling.

An embodiment of this application provides a resource configuration method. The method is applied to a first communication node.

The method includes receiving first resource configuration information configured by a second communication node, where the first resource configuration information includes configuration information of a resource block set corresponding to a first-type cell, a first parameter of the resource block set is greater than or equal to a second parameter of a bandwidth part (BWP) selected on a second-type cell, the first-type cell is a cell corresponding to a first network element in the first communication node, and the second-type cell is a first cell group corresponding to a second network element in the first communication node; and configuring a frequency domain resource of the first-type cell based on the first resource configuration information.

An embodiment of this application provides a resource configuration method. The method is applied to a second communication node.

The method includes sending first resource configuration information to a first network element in a first communication node, where the first resource configuration information includes configuration information of a resource block set corresponding to a first-type cell, a first parameter of the resource block set is greater than or equal to a second parameter of a bandwidth part (BWP) selected on a second-type cell, the first-type cell is a cell corresponding to the first network element in the first communication node, and the second-type cell is a first cell group corresponding to a second network element in the first communication node.

An embodiment of this application provides a communication device. The memory is configured to store at least one program. The at least one processor is configured to, when executing the at least one program, perform the resource configuration method of any previous embodiment.

An embodiment of this application provides a storage medium storing a computer program which, when executed by a processor, causes the processor to perform the resource configuration method of any previous embodiment.

### BRIEF DESCRIPTION OF DRAWINGS

FIG. 1 is a networking diagram of a relay network in an IAB technology in the related art.
FIG. 2 is a flowchart of a resource configuration method according to an embodiment of this application.
FIG. 3 is a flowchart of a resource configuration method according to an embodiment of this application.
FIG. 4 is a block diagram of a resource configuration apparatus according to an embodiment of this application.
FIG. 5 is a block diagram of a resource configuration apparatus according to an embodiment of this application.
FIG. 6 is a diagram illustrating the structure of a communication device according to an embodiment of this application.

### DETAILED DESCRIPTION

Embodiments of this application are described hereinafter in conjunction with drawings. This application is described hereinafter in conjunction with embodiments and drawings. The examples illustrated are intended to explain this application.

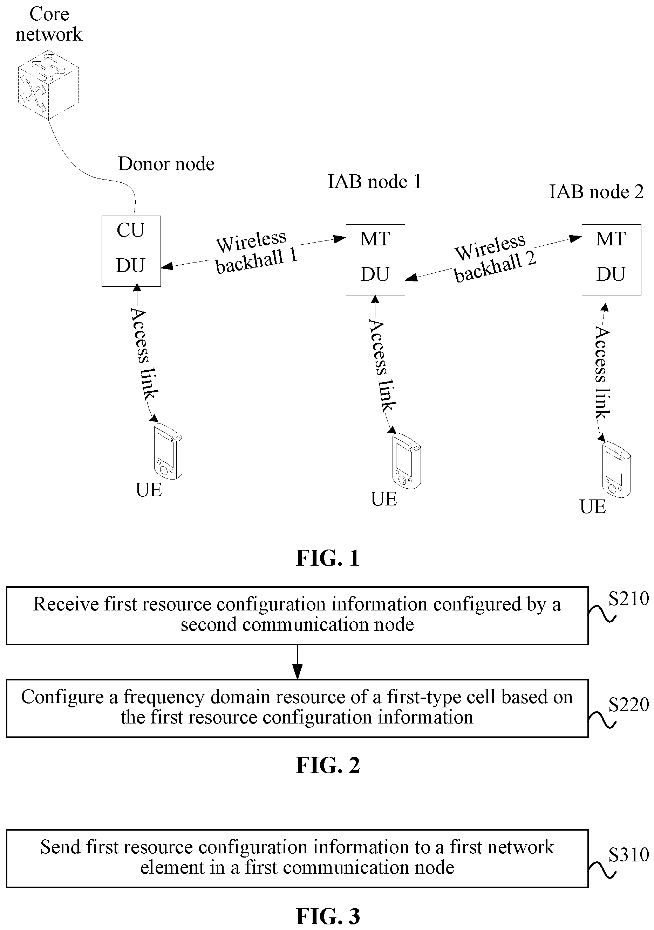

FIG. 1 is a networking diagram of a relay network in an IAB technology in the related art. A structure of a relay network in an IAB technology is shown in FIG. 1. A node that has a direct connection (for example, a wired connection) to the core network is referred to as an IAB donor or a donor node. The node may obtain downlink data or send uplink data to the core network. The node generally does not include an MT, but may include a CU entity (central unit). The parent IAB node of IAB node 2 is IAB node 1. The parent node of IAB node 1 is the donor node. The CU is logically connected to DUs of all IAB nodes. The CU central node can control or configure each level of DU node.

As described earlier, the CU central node can control or configure each level of DU node. An interface exists between the CU and each level of DU. This interface is referred to as an F1 interface. The CU on this interface may configure one or more resource block sets (RB sets) for each cell/carrier (DU cell) of the DU through F1 signaling. One RB set may include N physical resource blocks (PRBs). The PRB herein is sometimes also referred to as an RB that refers to a frequency domain resource including M subcarriers. The frequency domain width of one subcarrier is one subcarrier spacing (SCS). The CU may configure the size of N and the size of the SCS to control the size of the RB set.

For a serving cell, generally an upper-level device or a base station configures one or more bandwidth parts (BWPs) in one serving cell by using radio resource control (RRC) signaling. These BWPs may be uplink BWPs or downlink BWPs. Each BWP corresponds to one SCS. Each BWP may include several PRBs corresponding to the SCS. According to the number of PRBs included in a BWP, the number of PRBs included in a resource block group (RBG) corresponding to the BWP may be determined in a first configuration mode or a second configuration mode corresponding to the BWP. For the first configuration mode and the second configuration mode corresponding to the BWP, see a 3rd Generation Partnership Project (3GPP) protocol. The details are not described herein again.

FIG. 2 is a flowchart of a resource configuration method according to an embodiment of this application. This embodiment is applied to the coordination and allocation of resource intensities of the cell corresponding to a first network element and the cell corresponding to a second network element in a new multiplexing mode (for example, FDM, SDM, or full-duplex). This embodiment can be executed by a first communication node. Illustratively, the first communication node may be an IAB node. The first communication node may include the first network element and the second network element. Illustratively, the first network element may be a DU, and the second network element may be an MT. As shown in FIG. 2, this embodiment includes S210 and S220.

In S210, first resource configuration information configured by a second communication node is received.

The first resource configuration information includes configuration information of a resource block set corresponding to a first-type cell, a first parameter of the resource block set is greater than or equal to a second parameter of a bandwidth part (BWP) selected on a second-type cell, the first-type cell is a cell corresponding to a first network element in the first communication node, and the second-type cell is a first cell group corresponding to a second network element in the first communication node. In an embodiment, the second communication node refers to the parent node of the first communication node. Illustratively, the second communication node may be an IAB donor or a donor node (that is, a node directly connected to the core network). The IAB donor is a base station having an IAB function and includes a CU and a DU.

In an embodiment, the first resource configuration information may be from F1 AP (that is, F1 interface application protocol) signaling, also referred to as F1 signaling, sent by the CU in the second communication node to the DU in the first communication node. The second communication node may configure at least one first-type cell for the first network element in one first communication node. For the first-type cell, the second communication node also sends configuration information of the resource block set corresponding to the first-type cell. The configuration information of the resource block set may include a subcarrier spacing corresponding to the resource block set, the number of physical resource blocks included in one resource block set, or the number of resource block sets.

In S220, a frequency domain resource of the first-type cell is configured based on the first resource configuration information.

In an embodiment, the first network element in the first communication node configures the frequency domain resource of each cell corresponding to the first network element according to the first resource configuration information so that the first-type cell uses the corresponding frequency domain resource to perform data transmission.

In an embodiment, the resource configuration method applied to the first communication node also includes receiving second resource configuration information configured by a third communication node, where the second resource configuration information includes a third-type cell, the second-type cell is equivalent to the third-type cell or is a subset of the third-type cell, and the third-type cell is a second cell group corresponding to the second network element in the first communication node.

In an embodiment, the third communication node may be an RRC entity of the base station or a CU. Certainly, the third communication node may also be an upper-layer entity such as another resource control entity. This is not limited. In the case where the third communication node is a CU, the third communication node and the second communication node are the same and are each a CU in the parent node corresponding to the first communication node. In an embodiment, the second resource configuration information may be RRC signaling sent by the RRC entity to the second network element in the first communication node or may be signaling sent by the CU to the second network element in the first communication node. In the case where the second resource configuration information is signaling sent by the CU to the second network element in the first communication node, the third communication node and the second communication node are the same and are each parent node of the first communication node. In an embodiment, the second resource configuration information may also include BWP configuration in each third-type cell and information such as RBG and SCS configuration corresponding to each BWP.

In an embodiment, the resource configuration method applied to the first communication node also includes reporting multiplexing capability indication information of the first-type cell and multiplexing capability indication information between the first-type cell and each fourth-type cell to the second communication node, where each fourth-type cell is a third cell group corresponding to the second network element in the first communication node. In an embodiment, the first communication node actively reports the multiplexing capability indication information of the first-type cell and the multiplexing capability indication information between the first-type cell and the at least one fourth-type cell to the second communication node so that the second communication node can know the multiplexing capability between the first-type cell and the at least one fourth-type cell, thereby coordinating the resource granularity of the first-type cell and the resource granularity of the fourth-type cell to achieve more effective resource scheduling. In an embodiment, the fourth-type cell may be the same as the second-type cell. The fourth-type cell is a cell actively reported by the first network element in the first communication node according to its own multiplexing capability, and the second-type cell is a cell configured by the second communication node.

In an embodiment, the second-type cell includes a cell corresponding to a second network element supporting simultaneous operation with the first-type cell; or a fourth-type cell belongs to the second-type cell when one of the following conditions is satisfied: A simultaneous operation multiplexing capability value of the fourth-type cell and the first-type cell is at least configured to support, or a simultaneous operation multiplexing capability value of the fourth-type cell and the first-type cell is at least configured to support and require frequency division multiplexing. In an embodiment, the second network element refers to an MT. In an embodiment, the fourth-type cell belongs to the second-type cell only when the simultaneous operation multiplexing capability value of the fourth-type cell and the first type cell is at least configured to support and require frequency division multiplexing. In another embodiment, the fourth-type cell belongs to the second-type cell only when the simultaneous operation multiplexing capability value of the fourth-type cell and the first-type cell is at least configured to support or configured to support and require frequency division multiplexing.

In an embodiment, the selected BWP includes one of the following: a BWP including the minimum number of physical resource blocks (PRBs) in the second-type cell; a BWP having the minimum frequency domain width in the second-type cell; a BWP corresponding to a resource block group (RBG) using the minimum number of PRBs in the second-type cell; a BWP corresponding to an RBG using the minimum frequency domain width in the second-type cell; a BWP including the maximum number of PRBs in the second-type cell; a BWP having the maximum frequency domain width in the second-type cell; a BWP corresponding to an RBG using the maximum number of PRBs in the second-type cell; or a BWP corresponding to an RBG using the maximum frequency domain width in the second-type cell. In an embodiment, after the second-type cell corresponding to a first-type cell is determined, at least one BWP may be configured for each second-type cell, and each BWP corresponds to a determined SCS and a determined RBG. In addition, the first-type cell also corresponds to a configuration of the number of PRBs included in the resource block set. To configure a proper resource granularity, that is, a proper size of the resource block set, for the first-type cell, it is required to determine which BWP is used as a reference in configuring the size of the resource block set. In an embodiment, the BWP selected in the second-type cell may be configured as a BWP having the minimum resource granularity, that is, the BWP selected in the second-type cell may be a BWP including the minimum number of PRBs in the second-type cell, or the BWP selected in the second-type cell may be a BWP having the minimum frequency domain width in the second-type cell, or the BWP selected in the second-type cell may be a BWP corresponding to an RBG using the minimum number of PRBs in the second-type cell, or the BWP selected in the second-type cell may be a BWP corresponding to an RBG using the minimum frequency domain width in the second-type cell. In an embodiment, the BWP selected in the second-type cell may be configured as a BWP having the maximum resource granularity, that is, the BWP selected in the second-type cell may be a BWP including the maximum number of PRBs in the second-type cell, or the BWP selected in the second-type cell may be a BWP having the maximum frequency domain width in the second-type cell, or the BWP selected in the second-type cell may be a BWP corresponding to an RBG using the maximum number of PRBs in the second-type cell, or the BWP selected in the second-type cell may be a BWP corresponding to an RBG using the maximum frequency domain width in the second-type cell.

In an embodiment, the first parameter includes the number of PRBs included in the resource block set, and the second parameter includes the number of PRBs included in an RBG in the BWP; or the first parameter includes a frequency domain width of the resource block set, and the second parameter includes a frequency domain width of an RBG in the BWP. In an embodiment, if the BWP selected in the second-type cell has the minimum number of PRBs or an RBG of the BWP has the minimum number of PRBs, then the number of PRBs included in a resource block set configured in the first-type cell is greater than or equal to the number of PRBs included in an RBG in a BWP selected in the second-type cell. In an embodiment, if the BWP selected in the second-type cell has the maximum frequency domain width or an RBG of the BWP has the maximum frequency domain width, then the frequency domain width of a resource block set configured in the first-type cell is greater than or equal to the frequency domain width of an RBG of the BWP selected in the second-type cell.

In an embodiment, the number of PRBs included in an RBG in a BWP includes one of the following: the number of PRBs determined in a first configuration mode corresponding to the BWP; the number of PRBs determined in a second configuration mode corresponding to the BWP; a smaller number among the number of PRBs determined in a first configuration mode corresponding to the BWP and the number of PRBs determined in a second configuration mode corresponding to the BWP; or a larger number among the number of PRBs determined in a first configuration mode corresponding to the BWP and the number of PRBs determined in a second configuration mode corresponding to the BWP. In an embodiment, one BWP may correspond to two RBG configuration modes, namely, a first configuration mode and a second configuration mode. RBG sizes corresponding to different configuration modes are different, that is, the RBG may include different numbers of PRBs. In an embodiment, the number of PRBs included in one RBG in one BWP may be the number of PRBs determined in a first configuration mode, or may be the number of PRBs determined in a second configuration mode, or may be a smaller number among the number of PRBs determined in a first configuration mode and the number of PRBs determined in a second configuration mode, or a larger number among the number of PRBs determined in a first configuration mode and the number of PRBs determined in a second configuration mode.

In an embodiment, a subcarrier spacing of a resource block set configured in the first-type cell is less than or equal to a subcarrier spacing of the BWP selected in the second-type cell. In an embodiment, a subcarrier spacing of a resource block set configured in the first-type cell is less than or equal to a subcarrier spacing of the BWP selected in the second-type cell so that a frequency domain resource granularity configured in the first-type cell is greater than or equal to a frequency domain resource granularity scheduled by the second network element, achieving more effective resource scheduling.

FIG. 3 is a flowchart of a resource configuration method according to an embodiment of this application. This embodiment is applied to the coordination and allocation of resource intensities of the cell corresponding to a first network element and the cell corresponding to a second network element in a new multiplexing mode (for example, FDM, SDM, or full-duplex). This embodiment can be executed by a second communication node. As shown in FIG. 3, this embodiment includes S310.

In S310, first resource configuration information is sent to a first network element in a first communication node.

The first resource configuration information includes configuration information of a resource block set corresponding to a first-type cell, a first parameter of the resource block set is greater than or equal to a second parameter of a bandwidth part (BWP) selected on a second-type cell, the first-type cell is a cell corresponding to a first network element in the first communication node, and the second-type cell is a first cell group corresponding to a second network element in the first communication node. In an embodiment, the second communication node configures a resource granularity, that is, first resource configuration information, for the first network element in the first communication node and sends the first resource configuration information to the first network element in the first communication node so that the first network element can configure the frequency domain resource of the first-type cell according to the first resource configuration information to achieve more effective resource scheduling.

In an embodiment, the resource configuration method applied to the second communication node also includes sending second resource configuration information to the second network element in the first communication node, where the second resource configuration information includes a third-type cell, the second-type cell is equivalent to the third-type cell or is a subset of the third-type cell, and the third-type cell is a second cell group corresponding to the second network element in the first communication node. In an embodiment, in the case where the second resource configuration information is signaling sent by the CU to the second network element in the first communication node, the second communication node configures a resource granularity, that is, second resource configuration information, for the second network element in the first communication node and sends the second resource configuration information to the second network element in the first communication node so that the second network element can configure, according to the second resource configuration information, the frequency domain resource scheduled by the second network element.

In an embodiment, the resource configuration method applied to the second communication node also includes receiving multiplexing capability indication information of the first-type cell and multiplexing capability indication information between the first-type cell and each fourth-type cell reported by the first communication node, where the fourth-type cell is a third cell group corresponding to the second network element in the first communication node.

In an embodiment, the second-type cell includes a cell corresponding to a second network element supporting simultaneous operation with the first-type cell; or a fourth-type cell belongs to the second-type cell when one of the following conditions is satisfied: A simultaneous operation multiplexing capability value of the fourth-type cell and the first-type cell is at least configured to support, or a simultaneous operation multiplexing capability value of the fourth-type cell and the first-type cell is at least configured to support and require frequency division multiplexing.

In an embodiment, the selected BWP includes one of the following: a BWP including the minimum number of physical resource blocks (PRBs) in the second-type cell; a BWP having the minimum frequency domain width in the second-type cell; a BWP corresponding to a resource block group (RBG) using the minimum number of PRBs in the second-type cell; a BWP corresponding to an RBG using the minimum frequency domain width in the second-type cell; a BWP including the maximum number of PRBs in the second-type cell; a BWP having the maximum frequency domain width in the second-type cell; a BWP corresponding to an RBG using the maximum number of PRBs in the second-type cell; or a BWP corresponding to an RBG using the maximum frequency domain width in the second-type cell.

In an embodiment, the first parameter includes the number of PRBs included in the resource block set, and the second parameter includes the number of PRBs included in an RBG in the BWP; or the first parameter includes a frequency domain width of the resource block set, and the second parameter includes a frequency domain width of an RBG in the BWP.

In an embodiment, the number of PRBs included in an RBG in a BWP includes one of the following: the number of PRBs determined in a first configuration mode corresponding to the BWP; the number of PRBs determined in a second configuration mode corresponding to the BWP; a smaller number among the number of PRBs determined in a first configuration mode corresponding to the BWP and the number of PRBs determined in a second configuration mode corresponding to the BWP; or a larger number among the number of PRBs determined in a first configuration mode corresponding to the BWP and the number of PRBs determined in a second configuration mode corresponding to the BWP.

In an embodiment, a subcarrier spacing of a resource block set configured in the first-type cell is less than or equal to a subcarrier spacing of the BWP selected in the second-type cell.

For explanations of parameters such as the first resource configuration information, the second resource configuration information, the first parameter, the second parameter, the second-type cell, and the selected BWP in the resource configuration method applied to the second communication node, see descriptions of corresponding parameters in any previous embodiment of the resource configuration method applied to the first communication node. The details are not described here again.

In an embodiment, a process of the multiplexing capability indication information reported by the first communication node is described by using an example in which the first communication node is an IAB node, the IAB includes a first network element and a second network element, the first network element is a DU, the second network element is an MT, the first-type cell is a DU cell, the second-type cell is a first MT cell group, the third-type cell is a second MT cell group, and the fourth-type cell is a third MT cell group. In an embodiment, a frequency domain resource granularity configured by the IAB DU is greater than or equal to a frequency domain resource granularity scheduled by the IAB MT. A frequency domain resource granularity configured for one DU cell may be one RB set, and a frequency domain resource granularity in one MT cell is one RBG in one BWP. As described earlier, the IAB node (generally the IAB DU) may also report multiplexing capability indication information between one DU cell and each MT cell to the network. Illustratively, Table 1 describes multiplexing capability indication information according to an embodiment of this application. The IAB node may report the multiplexing capability indication information described in Table 1 to the network so that the network can know the multiplexing capability between the DU cell and one or more MT cells.

**Table 1 Multiplexing capability indication information**

| | Range | Value | Description |
|---|---|---|---|
| IAB-MT Cell List | 1 | | |
| >IAB-MT Cell Item | 1 .. < the maximum number of cells > | | |
| >>Cell Identifier | | 36-bit character string | Identifier of the MT cell |
| >>DU_RX/M T_RX | | Enumerated value (support or not support) | Indicates whether receiving at the DU and receiving at the MT are supported simultaneously |
| >>DU_TX/MT _TX | | Enumerated value (support or not support) | Indicates whether sending at the DU and sending at the MT are supported simultaneously |
| >>DU_RX/M T_TX | | Enumerated value (support or not support) | Indicates whether receiving at the DU and sending at the MT are supported simultaneously |
| >>DU_TX/MT _RX | | Enumerated value (support or not support) | Indicates whether sending at the DU and receiving at the MT are supported simultaneously |
| >>DU_RX/M T_RX_extend | | Enumerated value (support, not support, or support and require FDM) | Indicates whether receiving at the DU and receiving at the MT are supported simultaneously |
| | | | Indication in DU_RX/MT_RX is ignored if this support is present. |
| >>DU_TX/MT _TX_extend | | Enumerated value (support, not support, or support and require FDM) | Indicates whether sending at the DU and sending at the MT are supported simultaneously |
| | | | Indication in DU_TX/MT_TX is ignored if this support is present. |
| >>DU_RX/M T_TX_extend | | Enumerated value (support, not support, or support and require FDM) | Indicates whether receiving at the DU and sending at the MT are supported simultaneously |
| | | | Indication in DU_RX/MT_TX is ignored if this support is present. |
| >>DU_TX/MT _RX_extend | | Enumerated value (support, not support, or support and require FDM) | Indicates whether sending at the DU and receiving at the MT are supported simultaneously |
| | | | Indication in DU_TX/MT_RX is ignored if this support is present. |

It can be learned from Table 1 that one DU cell and some MT cells do not support simultaneous operation. In this case, no restriction relationship is configured between an RB set of the DU cell and a resource granularity of the MT cell. If a proper RB set of a DU cell is configured, a MT cell group (namely, first-type cells, which may also be referred to as a first cell group corresponding to the second network element) associated with the DU cell is required to be first determined.

In an example, the network layer may configure one MT cell group (that is, a third-type cell, which may also be referred to as a second MT cell group) corresponding to one DU cell. The configured one MT cell group is the first MT cell group used to determine the RB set resource granularity of the DU cell. In an example, the configured one MT cell group may be MT cells included in a multiplexing capability table of the DU cell. In an example, the configured one MT cell group may be all MT cells configured for the IAB MT.

In another example, when only one MT cell and a DU cell support simultaneous operation and require FDM, the MT cell belongs to the first MT cell group. For example, in the multiplexing capability table of DU cell 1, if values of all multiplexing capabilities of MT cell 1 are not support, MT cell 1 does not belong to the first MT cell group; otherwise, if at least one multiplexing capability corresponding to MT cell 2 is configured to support and require FDM, MT cell 2 belongs to the first MT cell group.

In another example, when only one MT cell and a DU cell support simultaneous operation and require FDM, the MT cell belongs to the first MT cell group. For example, in the multiplexing capability table of DU cell 1, if values of all multiplexing capabilities of MT cell 1 are not support or support, MT cell 1 does not belong to the first MT cell group; otherwise, if at least one multiplexing capability corresponding to MT cell 2 is configured to support and require FDM, MT cell 2 belongs to the first MT cell group.

In an embodiment, a configuration process of a BWP selected in a second-type cell is described by using an example in which the first communication node is an IAB node, the IAB includes a first network element and a second network element, the first network element is a DU, the second network element is an MT, the first-type cell is a DU cell, and the second-type cell is a first MT cell group (which may also be referred to as a first IAB MT cell group).

After the first MT cell group corresponding to one DU cell is determined, each MT cell may be configured with one or more BWPs, and each BWP corresponds to a determined SCS and a determined RBG. In addition, the DU cell also corresponds to the configuration of the number of PRBs included in the RB set and the configuration of the reference SCS. To set a proper DU cell resource granularity, that is, a proper size of the RB set of the DU cell, it is necessary to determine which BWP is used as a reference in setting the size of the RB set.

Determining the BWP selected in the first MT cell group as a BWP having the minimum resource granularity includes the following:

The BWP including the minimum number of PRBs in the first IAB MT cell group is the selected BWP. For example, regardless of an SCS of each BWP, the BWP including the minimum number of PRBs is selected from all BWPs to serve as the selected BWP; or the BWP having the minimum frequency domain width in the first IAB MT cell group is the selected BWP. The number of PRBs in the BWP and the SCS are both taken into account. For example, if BWP 1 has 36 PRBs and the SCS is 60 kHz, the frequency domain width of BWP 1 is 36* 12*60 kHz; and if BWP 2 has 72 PRBs and the SCS is 15 kHz, the frequency domain width of BWP 2 is 72*12*15 kHz. Although BWP 2 has a larger number of PRBs, the frequency domain width of BWP 2 is smaller, so BWP 2 is preferentially selected when a specific BWP is selected; or the BWP corresponding to the RBG that uses the minimum number of PRBs in the first IAB MT cell group is the selected BWP. For example, regardless of an SCS of each BWP, an RBG of each BWP corresponds to a specific number of PRBs, and the RBG having the minimum number of PRBs is selected from the RBGs, and the BWP in which the selected RBG is located is used as the selected BWP; or the BWP corresponding to the RBG using the minimum frequency domain width in the first IAB MT cell group is used as the selected BWP. The number of PRBs of the RBG and the SCS are both taken into account. For example, if RBG 1 of BWP 1 has four PRBs and the SCS is 60 kHz, the frequency domain width of BWP 1 is 4*12*60 kHz; and if RBG 2 of BWP 2 has 8 PRBs and the SCS is 15 kHz, the frequency domain width of BWP 2 is 8*12*15 kHz. Although RBG 2 of BWP 2 has more PRBs, the frequency domain width of BWP 2 is smaller, so BWP 2 corresponding to RBG 2 is preferentially selected when a specific BWP is selected.

In an example, if the selected BWP has the minimum number of PRBs or the RBG of the selected BWP has the minimum number of PRBs, the number of PRBs (that is, the first parameter) of an RB set configured in the DU cell is greater than or equal to the number of PRBs (that is, the second parameter) included in the RBG of the selected BWP in the first IAB MT cell group.

In an example, if the selected BWP has the minimum frequency domain width or the RBG of the selected BWP has the minimum frequency domain width, the frequency domain width (namely, the first parameter) of an RB set configured in the DU cell is greater than or equal to the frequency domain width (namely, the second parameter) of the RBG of the selected BWP in the first IAB MT cell group. For example, if the RBG of the selected BWP is M PRBs and the SCS is x (KHz), the frequency domain width N* 12*y (KHz) of the RB set should be greater than or equal to M*12*x (KHz). Here N is the number of PRBs included in the RB set, and y is the SCS of the RB set. That is, the IAB device expects the network to configure an appropriate value of N and/or y to satisfy the preceding relationship.

In an embodiment, when the BWP is selected from the BWPs in the first IAB MT cell group, both uplink BWPs and downlink BWPs configured in the first MT cell group can participate in the preceding BWP selection process based on the number of PRBs or the frequency domain width of the BWP (or RBG). In another embodiment, if the multiplexing capability of an IAB MT cell belonging to the first group and the DU cell supports that only sending at the MT can be performed simultaneously with sending or receiving at the DU, then only an uplink BWP in the MT cell can be selected as the BWP, that is, only an uplink BWP in the MT cell participates in the BWP selection process based on the number of PRBs or the frequency domain width of the BWP (or RBG); if the multiplexing capability of an IAB MT cell belonging to the first group and the DU cell supports that only receiving at the MT can be performed simultaneously with sending or receiving at the DU, then only a downlink BWP in the MT cell can be selected as the BWP; and if the multiplexing capability of an IAB MT cell belonging to the first group and the DU cell supports that sending or receiving at the MT can be performed simultaneously with sending or receiving at the DU, both an uplink BWP and a downlink BWP in the MT cell can be selected as the BWP.

In an embodiment, a configuration process of a BWP selected in a second-type cell is described by using an example in which the first communication node is an IAB node, the IAB includes a first network element and a second network element, the first network element is a DU, the second network element is an MT, the first-type cell is a DU cell, and the second-type cell is a first MT cell group.

After the first MT cell group corresponding to one DU cell is determined, each MT cell may be configured with one or more BWPs, and each BWP corresponds to a determined SCS and a determined RBG. In addition, the DU cell also corresponds to the configuration of the number of PRBs included in the RB set and the configuration of the reference SCS. To set a proper DU cell resource granularity, that is, a proper size of the RB set of the DU cell, it is necessary to determine which BWP is used as a reference in setting the size of the RB set.

Determining the BWP selected in the first MT cell group as a BWP having the maximum resource granularity includes the following:

The BWP including the maximum number of PRBs in the first IAB MT cell group is the selected BWP. For example, regardless of an SCS of each BWP, the BWP including the maximum number of PRBs is selected from all BWPs to serve as the selected BWP; or the BWP having the maximum frequency domain width in the first IAB MT cell group is the selected BWP. The number of PRBs in the BWP and the SCS are both taken into account. For example, if BWP 1 has 36 PRBs and the SCS is 60 kHz, the frequency domain width of BWP 1 is 36*12*60 kHz; and if BWP 2 has 72 PRBs and the SCS is 15 kHz, the frequency domain width of BWP 2 is 72*12*15 kHz. Although BWP 2 has a larger number of PRBs, the frequency domain width of BWP 2 is smaller, so BWP 1 is preferentially selected when a specific BWP is selected; or the BWP corresponding to the RBG that uses the maximum number of PRBs in the first IAB MT cell group is the selected BWP. For example, regardless of an SCS of each BWP, an RBG of each BWP corresponds to a specific number of PRBs, and the RBG having the maximum number of PRBs is selected from the RBGs, and the BWP in which the selected RBG is located is used as the selected BWP; or the BWP corresponding to the RBG using the maximum frequency domain width in the first IAB MT cell group is used as the selected BWP. The number of PRBs of the RBG and the SCS are both taken into account. For example, if RBG 1 of BWP 1 has four PRBs and the SCS is 60 kHz, the frequency domain width of BWP 1 is 4*12*60 kHz; and if RBG 2 of BWP 2 has 8 PRBs and the SCS is 15 kHz, the frequency domain width of BWP 2 is 8*12*15 kHz. Although RBG 2 of BWP 2 has more PRBs, the frequency domain width of BWP 2 is smaller, so BWP 1 corresponding to RBG 1 is preferentially selected when a specific BWP is selected.

In an example, if the selected BWP has the maximum number of PRBs or the RBG of the selected BWP has the maximum number of PRBs, the number of PRBs (that is, the first parameter) of an RB set configured in the DU cell is greater than or equal to the number of PRBs (that is, the second parameter) included in the RBG of the selected BWP in the first IAB MT cell group.

In an example, if the selected BWP has the maximum frequency domain width or the RBG of the selected BWP has the maximum frequency domain width, the frequency domain width (namely, the first parameter) of an RB set configured in the DU cell is greater than or equal to the frequency domain width (namely, the second parameter) of the RBG of the selected BWP in the first IAB MT cell group. For example, if the RBG of the selected BWP is M PRBs and the SCS is x (KHz), the frequency domain width N*12*y (KHz) of the RB set should be greater than or equal to M*12*x (KHz). Here N is the number of PRBs included in the RB set, and y is the SCS of the RB set. That is, the IAB device expects the network to configure an appropriate value of N and/or y to satisfy the preceding relationship.

In an embodiment, a configuration process of a BWP selected in a second-type cell is described by using an example in which the first communication node is an IAB node, the IAB includes a first network element and a second network element, the first network element is a DU, the second network element is an MT, the first-type cell is a DU cell, and the second-type cell is a first MT cell group.

For an IAB DU cell, the size of the RB set, that is, the number of included PRBs, in the DU cell may be configured by using higher-layer signaling. The first resource configuration information also includes, for example, the number of RB sets and a reference SCS. It is assumed that the configurable RB set size of the IAB node is greater than or equal to the RBG size of the minimum BWP configured in an MT cell that supports simultaneous operation with the DU cell. The RBG size is the number of PRBs included in the RBG, and the minimum BWP is a BWP having the minimum number of PRBs.

In an embodiment, for an IAB DU cell, the size of the RB set, that is, the number of included PRBs, in the DU cell may be configured by using higher-layer signaling. The first resource configuration information also includes, for example, the number of RB sets and a reference SCS. It is assumed that the configurable RB set size of the IAB node is greater than or equal to the RBG size of the minimum BWP configured in an MT cell that supports simultaneous operation with the DU cell and requires FDM. The RBG size is the number of PRBs included in the RBG, and the minimum BWP is a BWP having the minimum number of PRBs.

In an embodiment, a configuration process of a BWP selected in a second-type cell is described by using an example in which the first communication node is an IAB node, the IAB includes a first network element and a second network element, the first network element is a DU, the second network element is an MT, and the first-type cell is a DU cell.

In addition to the preceding rule, an SCS that can be configured for an RB set may also be limited. In an example, an SCS parameter of an RB set configured in the DU cell is less than or equal to an SCS parameter of the selected BWP in the first IAB MT cell group. In another example, an SCS parameter of an RB set configured in the DU cell is greater than or equal to an SCS parameter of the selected BWP in the first IAB MT cell group.

In an embodiment, one BWP may correspond to two RBG configuration modes, namely, a first configuration mode and a second configuration mode. RBG sizes corresponding to different configuration modes are different, that is, the RBG may include different numbers of PRBs. In an embodiment, the size of the RBG or the number of PRBs included may be the number of PRBs determined in a first configuration mode, or may be the number of PRBs determined in a second configuration mode, or may be a smaller number among the number of PRBs determined in a first configuration mode and the number of PRBs determined in a second configuration mode, or a larger number among the number of PRBs determined in a first configuration mode and the number of PRBs determined in a second configuration mode.

The previous embodiments can be combined with each other when not in conflict. This is not limited herein.

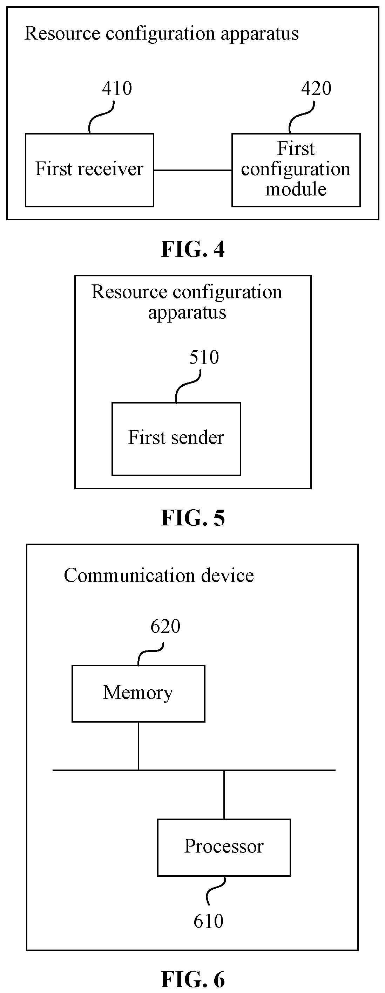

FIG. 4 is a block diagram of a resource configuration apparatus according to an embodiment of this application. This embodiment is applied to a first communication node. As shown in FIG. 4, the resource configuration apparatus of this embodiment includes a first receiver 410 and a first configuration module 420.

The first receiver 410 is configured to receive first resource configuration information configured by a second communication node.

The first resource configuration information includes configuration information of a resource block set corresponding to a first-type cell, a first parameter of the resource block set is greater than or equal to a second parameter of a bandwidth part (BWP) selected on a second-type cell, the first-type cell is a cell corresponding to a first network element in the first communication node, and the second-type cell is a first cell group corresponding to a second network element in the first communication node.

The first configuration module 420 is configured to configure a frequency domain resource of the first-type cell based on the first resource configuration information.

In an embodiment, the resource configuration apparatus applied to the first communication node also includes a second receiver and a second configuration module.

The second receiver is configured to receive second resource configuration information configured by a third communication node, where the second resource configuration information includes a third-type cell, the second-type cell is equivalent to the third-type cell or is a subset of the third-type cell, and the third-type cell is a second cell group corresponding to the second network element in the first communication node. The second configuration module is configured to configure, based on the second resource configuration information, a frequency domain resource scheduled by the second network element.

In an embodiment, the resource configuration apparatus applied to the first communication node also includes a reporting module.

The reporting module is configured to report multiplexing capability indication information of the first-type cell and multiplexing capability indication information between the first-type cell and each fourth-type cell to the second communication node, where each fourth-type cell is a third cell group corresponding to the second network element in the first communication node.

In an embodiment, the second-type cell includes a cell corresponding to a second network element supporting simultaneous operation with the first-type cell; or a fourth-type cell belongs to the second-type cell when one of the following conditions is satisfied: a simultaneous operation multiplexing capability value of the fourth-type cell and the first-type cell is at least configured to support, or a simultaneous operation multiplexing capability value of the fourth-type cell and the first-type cell is at least configured to support and require frequency division multiplexing.

In an embodiment, the selected BWP includes one of the following: a BWP including the minimum number of physical resource blocks (PRBs) in the second-type cell; a BWP having the minimum frequency domain width in the second-type cell; a BWP corresponding to a resource block group (RBG) using the minimum number of PRBs in the second-type cell; a BWP corresponding to an RBG using the minimum frequency domain width in the second-type cell; a BWP including the maximum number of PRBs in the second-type cell; a BWP having the maximum frequency domain width in the second-type cell; a BWP corresponding to an RBG using the maximum number of PRBs in the second-type cell; or a BWP corresponding to an RBG using the maximum frequency domain width in the second-type cell.

In an embodiment, the first parameter includes the number of PRBs included in the resource block set, and the second parameter includes the number of PRBs included in an RBG in the BWP; or the first parameter includes a frequency domain width of the resource block set, and the second parameter includes a frequency domain width of an RBG in the BWP.

In an embodiment, the number of PRBs included in an RBG in a BWP includes one of the following: the number of PRBs determined in a first configuration mode corresponding to the BWP; the number of PRBs determined in a second configuration mode corresponding to the BWP; a smaller number among the number of PRBs determined in a first configuration mode corresponding to the BWP and the number of PRBs determined in a second configuration mode corresponding to the BWP; or a larger number among the number of PRBs determined in a first configuration mode corresponding to the BWP and the number of PRBs determined in a second configuration mode corresponding to the BWP.

In an embodiment, a subcarrier spacing of a resource block set configured in the first-type cell is less than or equal to a subcarrier spacing of the BWP selected in the second-type cell.

The resource configuration apparatus of this embodiment is configured to implemented the resource configuration method applied to the first communication node in the embodiment shown in FIG. 2. The implementation principles and technical effects of the resource configuration apparatus of this embodiment are the same as those of the resource configuration method applied to the first communication node and thus are not described here again.

FIG. 5 is a block diagram of a resource configuration apparatus according to an embodiment of this application. This embodiment is applied to a second communication node. As shown in FIG. 5, the resource configuration apparatus of this embodiment includes a first sender 510.

The first sender 510 is configured to send first resource configuration information to a first network element in a first communication node, where the first resource configuration information includes configuration information of a resource block set corresponding to a first-type cell, a first parameter of the resource block set is greater than or equal to a second parameter of a bandwidth part (BWP) selected on a second-type cell, the first-type cell is a cell corresponding to the first network element in the first communication node, and the second-type cell is a first cell group corresponding to a second network element in the first communication node.

In an embodiment, the resource configuration apparatus applied to the second communication node also includes a second sender.

The second sender is configured to send second resource configuration information to the second network element in the first communication node, where the second resource configuration information includes a third-type cell, the second-type cell is equivalent to the third-type cell or is a subset of the third-type cell, and the third-type cell is a second cell group corresponding to the second network element in the first communication node.

In an embodiment, the resource configuration apparatus applied to the second communication node also includes a receiver.

The receiver is configured to receive multiplexing capability indication information of the first-type cell and multiplexing capability indication information between the first-type cell and each fourth-type cell reported by the first communication node, where the fourth-type cell is a third cell group corresponding to the second network element in the first communication node.

In an embodiment, the second-type cell includes a cell corresponding to a second network element supporting simultaneous operation with the first-type cell; or a fourth-type cell belongs to the second-type cell when one of the following conditions is satisfied: a simultaneous operation multiplexing capability value of the fourth-type cell and the first-type cell is at least configured to support, or a simultaneous operation multiplexing capability value of the fourth-type cell and the first-type cell is at least configured to support and require frequency division multiplexing.

In an embodiment, the selected BWP includes one of the following: a BWP including the minimum number of physical resource blocks (PRBs) in the second-type cell; a BWP having the minimum frequency domain width in the second-type cell; a BWP corresponding to a resource block group (RBG) using the minimum number of PRBs in the second-type cell; a BWP corresponding to an RBG using the minimum frequency domain width in the second-type cell; a BWP including the maximum number of PRBs in the second-type cell; a BWP having the maximum frequency domain width in the second-type cell; a BWP corresponding to an RBG using the maximum number of PRBs in the second-type cell; or a BWP corresponding to an RBG using the maximum frequency domain width in the second-type cell.

In an embodiment, the first parameter includes the number of PRBs included in the resource block set, and the second parameter includes the number of PRBs included in an RBG in the BWP; or the first parameter includes a frequency domain width of the resource block set, and the second parameter includes a frequency domain width of an RBG in the BWP.

In an embodiment, the number of PRBs included in an RBG in a BWP includes one of the following: the number of PRBs determined in a first configuration mode corresponding to the BWP; the number of PRBs determined in a second configuration mode corresponding to the BWP; a smaller number among the number of PRBs determined in a first configuration mode corresponding to the BWP and the number of PRBs determined in a second configuration mode corresponding to the BWP; or a larger number among the number of PRBs determined in a first configuration mode corresponding to the BWP and the number of PRBs determined in a second configuration mode corresponding to the BWP.

In an embodiment, a subcarrier spacing of a resource block set configured in the first-type cell is less than or equal to a subcarrier spacing of the BWP selected in the second-type cell.

The resource configuration apparatus of this embodiment is configured to implement the resource configuration method applied to the second communication node in the embodiment shown in FIG. 3. The implementation principles and technical effects of the resource configuration apparatus of this embodiment are the same as those of the resource configuration method applied to the second communication node and thus are not described here again.

FIG. 6 is a diagram illustrating the structure of a communication device according to an embodiment of this application. As shown in FIG. 6, the device of this application includes a processor 610 and a memory 620. One or more processors 610 may be provided in the device. One processor 610 is shown as an example in FIG. 6. One or more memories 620 may be provided in the device. One memory 620 is shown as an example in FIG. 6. The processor 610 and memory 620 of the device may be connected through a bus or in other manners. The connection through a bus is used as an example in FIG. 6. In this embodiment, the device may be the first communication node or the second communication node.

As a computer-readable storage medium, the memory 620 may be configured to store software programs and computer-executable programs and modules, such as program instructions/modules (for example, the first receiver 410 and the first configuration module 420 in the resource configuration apparatus) corresponding to the device according to any embodiment of this application. The memory 620 may include a program storage region and a data storage region, where the program storage region may store an operating system and an application program required by at least one function, and the data storage region may store data created depending on the use of the device. Additionally, the memory 620 may include a high-speed random-access memory and may also include a nonvolatile memory such as at least one magnetic disk memory, a flash memory, or another nonvolatile solid-state memory. In some examples, the memory 620 may further include memories remotely disposed relative to the processor 610, and these remote memories may be connected to the device via a network. Examples of the preceding network include, but are not limited to, the Internet, an intranet, a local area network, a mobile communication network, and a combination thereof.

When the communication device is the first communication node, the device may be configured to perform the resource configuration method applied to the first communication node according to any previous embodiment and has corresponding functions and effects. When the communication device is the second communication node, the device may be configured to perform the resource configuration method applied to the second communication node according to any previous embodiment and has corresponding functions and effects.

An embodiment of this application provides a storage medium including computer-executable instructions which, when executed by a computer processor, is used for performing a resource configuration method applied to a first communication node. The method includes receiving first resource configuration information configured by a second communication node, where the first resource configuration information includes configuration information of a resource block set corresponding to a first-type cell, a first parameter of the resource block set is greater than or equal to a second parameter of a bandwidth part (BWP) selected on a second-type cell, the first-type cell is a cell corresponding to a first network element in the first communication node, and the second-type cell is a first cell group corresponding to a second network element in the first communication node; and configuring a frequency domain resource of the first-type cell based on the first resource configuration information.

An embodiment of this application provides a storage medium including computer-executable instructions which, when executed by a computer processor, is used for performing a resource configuration method applied to a second communication node. The method includes sending first resource configuration information to a first network element in a first communication node, where the first resource configuration information includes configuration information of a resource block set corresponding to a first-type cell, a first parameter of the resource block set is greater than or equal to a second parameter of a bandwidth part (BWP) selected on a second-type cell, the first-type cell is a cell corresponding to the first network element in the first communication node, and the second-type cell is a first cell group corresponding to a second network element in the first communication node.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of this application may be implemented in hardware or special-purpose circuits, software, logic, or any combination thereof. For example, some aspects may be implemented in hardware while other aspects may be implemented in firmware or software executable by a controller, a microprocessor, or another computing apparatus, though this application is not limited thereto.

Embodiments of this application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of this application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A resource configuration method, the method being applied to a first communication node and comprising:
receiving first resource configuration information configured by a second communication node, wherein the first resource configuration information comprises configuration information of a resource block set corresponding to a first-type cell, a first parameter of the resource block set is greater than or equal to a second parameter of a bandwidth part, BWP, selected on a second-type cell, the first-type cell is a cell corresponding to a first network element in the first communication node, and the second-type cell is a first cell group corresponding to a second network element in the first communication node; and
configuring a frequency domain resource of the first-type cell based on the first resource configuration information.

2. The method of claim 1, further comprising:
receiving second resource configuration information configured by a third communication node, wherein the second resource configuration information comprises a third-type cell, the second-type cell is equivalent to the third-type cell or is a subset of the third-type cell, and the third-type cell is a second cell group corresponding to the second network element in the first communication node; and
configuring, based on the second resource configuration information, a frequency domain resource scheduled by the second network element.

3. The method of claim 1, further comprising:
reporting multiplexing capability indication information of the first-type cell and multiplexing capability indication information between the first-type cell and each fourth-type cell to the second communication node, wherein the fourth-type cell is a third cell group corresponding to the second network element in the first communication node.

4. The method of claim 1 or 3, wherein the second-type cell comprises a cell corresponding to a second network element supporting simultaneous operation with the first-type cell; or a fourth-type cell belongs to the second-type cell when one of the following conditions is satisfied: a simultaneous operation multiplexing capability value of the fourth-type cell and the first-type cell is at least configured to support, or a simultaneous operation multiplexing capability value of the fourth-type cell and the first-type cell is at least configured to support and require frequency division multiplexing.

5. The method of any one of claims 1 to 3, wherein the selected BWP comprises one of the following: a BWP comprising a minimum number of physical resource blocks, PRBs, in the second-type cell; a BWP having a minimum frequency domain width in the second-type cell; a BWP corresponding to a resource block group, RBG, using a minimum number of PRBs in the second-type cell; a BWP corresponding to an RBG using a minimum frequency domain width in the second-type cell; a BWP comprising a maximum number of PRBs in the second-type cell; a BWP having a maximum frequency domain width in the second-type cell; a BWP corresponding to an RBG using a maximum number of PRBs in the second-type cell; or a BWP corresponding to an RBG using a maximum frequency domain width in the second-type cell.

6. The method of any one of claims 1 to 3, wherein the first parameter comprises a number of PRBs comprised in the resource block set, and the second parameter comprises a number of PRBs comprised in an RBG in the BWP; or
the first parameter comprises a frequency domain width of the resource block set, and the second parameter comprises a frequency domain width of an RBG in the BWP.

7. The method of any one of claims 1 to 3, wherein a number of PRBs comprised in an RBG in a BWP comprises one of the following: a number of PRBs determined in a first configuration mode corresponding to the BWP; a number of PRBs determined in a second configuration mode corresponding to the BWP; a smaller number among a number of PRBs determined in a first configuration mode corresponding to the BWP and a number of PRBs determined in a second configuration mode corresponding to the BWP; or a larger number among a number of PRBs determined in a first configuration mode corresponding to the BWP and a number of PRBs determined in a second configuration mode corresponding to the BWP.

8. The method of any one of claims 1 to 3, wherein a subcarrier spacing of a resource block set configured in the first-type cell is less than or equal to a subcarrier spacing of the BWP selected in the second-type cell.

9. A resource configuration method, the method being applied to a second communication node and comprising:
sending first resource configuration information to a first network element in a first communication node, wherein the first resource configuration information comprises configuration information of a resource block set corresponding to a first-type cell, a first parameter of the resource block set is greater than or equal to a second parameter of a bandwidth part, BWP, selected on a second-type cell, the first-type cell is a cell corresponding to the first network element in the first communication node, and the second-type cell is a first cell group corresponding to a second network element in the first communication node.

10. The method of claim 9, further comprising:
sending second resource configuration information to the second network element in the first communication node, wherein the second resource configuration information comprises a third-type cell, the second-type cell is equivalent to the third-type cell or is a subset of the third-type cell, and the third-type cell is a second cell group corresponding to the second network element in the first communication node.

11. The method of claim 10, further comprising:
receiving multiplexing capability indication information of the first-type cell and multiplexing capability indication information between the first-type cell and each fourth-type cell reported by the first communication node, wherein the fourth-type cell is a third cell group corresponding to the second network element in the first communication node.

12. A communication device, comprising a memory and at least one processor,
wherein the memory is configured to store at least one program; and
the at least one processor is configured to, when executing the at least one program, perform the resource configuration method of any one of claims 1 to 8 or the resource configuration method of any one of claims 9 to 11.

13. A storage medium storing a computer program which, when executed by a processor, causes the processor to perform the resource configuration method of any one of claims 1 to 8 or the resource configuration method of any one of claims 9 to 11.
